# FASCICULE DE BREVET EUROPEEN

(11) **EP 1 932 718 B1**
(45) Date de publication et mention de la délivrance du brevet: **06.01.2010**
(21) Numéro de dépôt: 07291419.5
(22) Date de dépôt: 29.11.2007
(51) Int. Cl.: B60P 3/10, B63B 25/00

(54) **Dispositif support pour le transport d'un catamaran**
Trägervorrichtung für den Transport eines Katamarans
Support device for transporting a catamaran

(30) Priorité: 11.12.2006 FR 0610761
(43) Date de publication de la demande: 18.06.2008
(73) Titulaire: Ferchaud, Eric, 76310 Sainte Adresse (FR)
(72) Inventeur: Ferchaud, Eric, 76310 Sainte Adresse (FR)
(74) Mandataire: Fruchard, Guy

(56) Documents cités:
- DE-A1- 19 819 184
- DE-U- 7 033 352
- FR-A1- 2 808 252
- US-A- 4 801 153

## Description

La présente invention concerne un dispositif support pour le transport d'un catamaran.

### ARRIERE PLAN DE L'INVENTION

On sait que le transport de nombreuses marchandises est maintenant effectué par bateau en disposant les marchandises dans des conteneurs normalisés dont les coins sont équipés d'organes d'accrochage à verrouillage rapide permettant de superposer des conteneurs les uns sur les autres et d'assurer le verrouillage d'un conteneur avec le conteneur disposé immédiatement en dessous de celui-ci.

Des problèmes se posent lorsque des marchandises ayant des dimensions supérieures à celles d'un conteneur doivent être transportées sur un bateau porte-conteneur. L'invention concerne plus particulièrement le transport de catamarans ayant une longueur de nacelle inférieure à la longueur d'un conteneur mais une largeur supérieure à la largeur de deux conteneurs. Pour leur transport, il est donc nécessaire de réserver une place sur le dessus de trois conteneurs accolés.

Pour l'arrimage du catamaran sur le bateau, on utilise des plaques support allongées ayant les dimensions de la face supérieure d'un conteneur. La plaque support est équipée d'organes d'accrochage disposés à l'aplomb des organes d'accrochage normalisés du conteneur de sorte qu'après mise en place de la plaque support, celle-ci est verrouillée sur un conteneur.

Dans le cas d'une mise en place au-dessus de trois conteneurs accolés, les deux conteneurs latéraux sont équipés d'une plaque support normalisée qui est verrouillée sur le conteneur correspondant. Pour la mise en place du catamaran, il est nécessaire de soulever celui-ci au moyen de sangles dont les extrémités sont accrochées aux moyens de levage normalisés adaptés pour effectuer une manutention rapide des conteneurs normalisés. La mise en place de ces sangles pour que le catamaran soit en équilibre stable lors du levage est délicate, de sorte que cette mise en place prend un temps très supérieur à celui de la manutention de conteneurs. En outre, une fois que le catamaran est posé sur les plaques support, il est nécessaire de l'arrimer sur celles-ci. Pour des raisons de sécurité du personnel effectuant cet arrimage, le nombre de conteneurs empilés en dessous du catamaran doit être limité à deux alors qu'il est habituellement possible d'empiler les conteneurs sur six niveaux et que la hauteur du catamaran est inférieure à la hauteur de deux conteneurs.

En pratique, un catamaran du type précité prend donc la place de douze conteneurs et le prix du transport du catamaran correspond donc au coût du transport de douze conteneurs.

Le document DE 70 33 352 U décrit un dispositif support de catamaran. Ce dispositif comporte néanmoins pas d'organes d'accrochage à un conteneur.

### OBJET DE L'INVENTION

Le but de l'invention est de proposer un dispositif support de catamaran permettant une manipulation aisée du catamaran et minimisant les frais de transport.

### RESUME DE L'INVENTION

En vue de la réalisation de ce but on propose, selon l'invention, un dispositif support de catamaran tel que décrit dans la revendication 1.

Il est ainsi possible d'effectuer sur le quai une mise en place du catamaran sur le dispositif support en posant les quilles du catamaran dans les berceaux. L'arrimage du catamaran sur le dispositif support est également réalisé sur le quai et la position des coques par rapport au châssis support laisse un accès libre aux organes d'accrochage du châssis support de sorte que le levage pour la mise en place sur le bateau est effectué en utilisant les moyens de levage habituels. Ainsi, il est non seulement possible de préparer le transport du catamaran à l'avance, ce qui diminue les frais de personnel, mais l'intervention manuelle sur le bateau est supprimée. Dans le cas d'un châssis support en forme de plaque normalisée il est donc possible de poser la plaque support centrale unique sur le dessus d'un empilage de conteneurs sur quatre niveaux, de sorte que le volume équivalent pour lequel le transport doit être payé est réduit à six conteneurs.

Selon une version avantageuse de l'invention, les berceaux ont un fond s'étendant en-dessous de la face supérieure du cassis support. On minimise ainsi la hauteur totale de l'ensemble à transporter.

Selon d'autres aspects avantageux de l'invention, l'organe support comporte des poutrelles transversales réunies par des entretoises s'étendant entre les poutrelles transversales, et des éléments de stabilisation fixés aux poutrelles transversales s'étendent au-delà de celles-ci selon une direction longitudinale du châssis support en prenant appui sur la plaque support. On réalise ainsi un ensemble rigide pouvant être aisément manipulé pour sa mise en place sur le châssis support et les éléments de stabilisation minimisent les contraintes auxquelles l'organe support est soumis lors de mouvements de basculement du catamaran.

Selon encore un autre aspect avantageux de l'invention en relation avec un châssis support équipé d'un cadre métallique, l'organe support est fixé au cadre métallique par des soudures. La fixation d'un organe support ayant des dimensions adaptées à celles du catamaran à transporter peut ainsi être effectuée très rapidement sur le quai et après le transport l'organe support peut aisément être séparé du châssis support en découpant les soudures avec une meuleuse. Le châssis support peut donc être récupéré pour les autres usages auxquels il est habituellement destiné.

### BREVE DESCRIPTION DES DESSINS

D'autres caractéristiques et avantages de l'invention apparaîtront à la lecture de la description qui suit d'un mode de réalisation préféré non limitatif de l'invention en relation avec les figures ci-jointes parmi lesquelles :
- la figure 1 est une vue en perspective du dispositif support selon l'invention avant la mise en place d'un catamaran,
- la figure 2 est une vue schématique du dessus après mise en place du catamaran,
- la figure 3 est une vue schématique de côté du dispositif support après mise en place d'un catamaran,
- la figure 4 est une vue schématique en bout du dispositif support sur lequel est monté un catamaran.

### DESCRIPTION DETAILLEE DE L'INVENTION

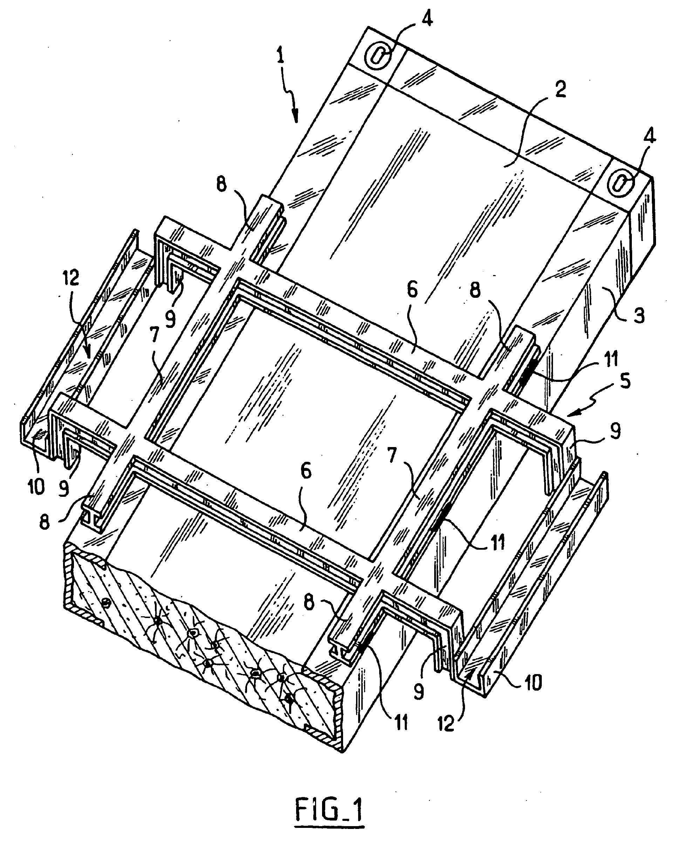

En référence à la figure 1, le dispositif support selon l'invention comporte de façon connue en soi un châssis support 1 en forme de plaque normalisée comprenant un noyau central rectangulaire allongé 2 en bois entouré d'un cadre métallique 3 et équipé à ses extrémités longitudinales avec des organes d'accrochage 4. Pour des raisons de dimensions du dessin, le châssis support 1 a été représenté tronqué sur la figure 1. Le châssis support 1 a des dimensions égales à celles de la face supérieure d'un conteneur.

Selon l'invention, le dispositif support comporte en outre un organe support généralement désigné en 5. Dans le mode de réalisation illustré, l'organe support 5 comporte des poutrelles 6 disposées transversalement au châssis support 1 et réunies par des entretoises 7 s'étendant entre les poutrelles 6. Les extrémités des poutrelles 6 s'étendent en porte à faux par rapport au châssis support 1. Au-delà des poutrelles 6 selon la direction longitudinale du châssis support, l'organe support comporte des éléments de stabilisation 8 formés par des éléments de poutrelles fixés aux poutrelles transversales 6 et s'étendant selon la direction longitudinale du châssis support en prenant appui sur le cadre métallique 3 du châssis support.

Dans le mode de réalisation illustré, les extrémités des poutrelles transversales 6 sont équipées de tronçons de renvoi 9 s'étendant vers le bas et des berceaux 10 réalisés à partir de profilés, en U sont fixés aux tronçons de renvoi. L'organe support ainsi réalisé est posé sur la face supérieure du châssis support et est fixé au châssis support 1 par exemple par des soudures 11 réalisées dans des endroits facilement accessibles pour solidariser les entretoises 7 et les éléments de stabilisation 8 avec le cadre 3 du châssis support. Dans cette position le fond 12 des berceaux 10 s'étend en-dessous de la face supérieure du châssis support.

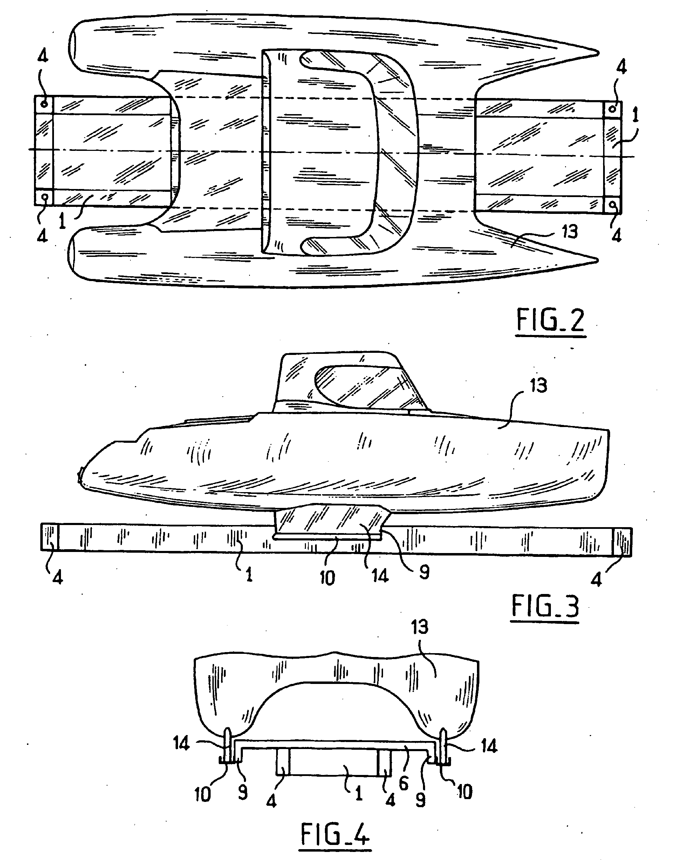

Ainsi qu'on peut le voir sur les figures 2 à 4, lors de la mise en place du catamaran 13 en disposant les quilles 14 du catamaran dans les berceaux 10, les organes d'accrochage 4 restent accessibles de sorte que pour manipuler l'ensemble, il est possible d'utiliser les moyens de levage habituels disponibles dans une zone portuaire. Le temps de manipulation et les risques d'accident sont donc considérablement minimisés.

Bien entendu, l'invention n'est pas limitée au mode de réalisation décrit et on peut y apporter des variantes de réalisation sans sortir du cadre de l'invention tel que défini par les revendications.

En particulier, bien que l'invention ait été illustrée avec des berceaux sous forme de profilés fixés à des tronçons de renvoi 9, les berceaux 10 peuvent être réalisés sous forme de tôles pliées directement fixées aux extrémités des poutrelles transversales 6.

Bien que la fixation de l'organe support 5 sur le châssis support 1 ait été illustrée par des soudures 11, on peut utiliser d'autres moyens en particulier lorsque le châssis support 1 est équipé de moyens d'arrimage des marchandises.

Bien que l'invention ait été décrite en relation avec un transport sur un bateau porte conteneurs, l'invention s'applique également au transport par tout type de véhicule routier, maritime, voire même aérien.

Le châssis support en forme de plaque peut être remplacé par un simple cadre et les poutrelles transversales peuvent être fixées directement sur les cotés du cadre en s'étendant en porte à faux par rapport à celui-ci.

## Revendications

1. Dispositif support de catamaran **caractérisé en ce qu'**il comporte un châssis support allongé (1) ayant des extrémités longitudinales équipées d'organes d'accrochage (4) adaptés à venir à l'aplomb d'organes d'accrochage normalisés d'un conteneur de sorte qu'après mise en place du châssis support sur le conteneur, le dispositif support est verrouillé sur le conteneur, ainsi qu'un organe support (5) qui est fixé au châssis support (1) transversalement à celui-ci et qui comporte des extrémités s'étendant en porte à faux auxquelles sont fixés des berceaux (10) s'étendant selon une direction longitudinale du châssis support de part et d'autre de celui-ci, de sorte que lorsqu'un catamaran est en place sur le dispositif, les organes d'accrochage restent accessibles pour des moyens de levage habituels disponibles dans une zone portuaire.

2. Dispositif selon la revendication 1, **caractérisé en ce que** les berceaux (10) ont un fond (12) s'étendant en-dessous de la face supérieure du châssis support.

3. Dispositif selon la revendication 1, **caractérisé en ce que** l'organe support est fixé sur la face supérieure du châssis support.

4. Dispositif selon la revendication 3, **caractérisé en ce que** l'organe support comporte des poutrelles transversales (6) réunies par des entretoises longitudinales (7).

5. Dispositif selon la revendication 4, **caractérisé en ce que** les poutrelles transversales (6) comportent des tronçons de renvoi (9) s'étendant vers le bas et les berceaux sont fixés aux tronçons de renvoi.

6. Dispositif selon la revendication 4, **caractérisé en ce qu'**il comporte des éléments de stabilisation (8) fixés aux poutrelles (6) et s'étendant au-delà de celles-ci selon la direction longitudinale du châssis support en prenant appui sur le châssis support.

7. Dispositif selon la revendication 1, **caractérisé en ce que** l'organe support (5) est fixé par des soudures (11) à un cadre métallique (3) du châssis support (1).

8. Dispositif selon la revendication 1, dans lequel les berceaux (10) sont adaptés à recevoir des quilles du catamaran.

## Claims

1. A catamaran support device **characterized in that** it comprises an elongate support base (1) having longitudinal ends equiped with connector members (4) adapted to be disposed vertically in register with the standardized connector members of a container so that, after the support base has been put into place on the container, said base is locked to the container, and a support member (5) fastened to the support base transversely to the support base (1) and having ends that extend cantilevered out and to which cradles (10) are fastened that extend in a longitudinal direction of the support base in such a manner that when a catamaran is in place on the support device, the connecting members remain accessible for hoist means that are usually available in a port zone.

2. A device according to claim 1, **characterized in that** the cradles (10) have bottoms (12) extending below the top face of the support base.

3. A device according to claim 1, **characterized in that** the support member is connected to the top face of the support base.

4. A device according to claim 3, **characterized in that** the support member comprises transverse girders (6) interconnected by longitudinal spacers (7).

5. A device according to claim 4, **characterized in that** the transverse girders (6) include downwardly-extending flanges (9) and the cradles are fastened to the flanges.

6. A device according to claim 4, **characterized in that** it further comprises stabilizer elements (8) fastened to the girders (6) and extending therebeyond in the longitudinal direction of the support base while bearing against the support base.

7. A device according to claim 1, **characterized in that** the support member (5) is fastened by welds (11) to a metal frame (3) of the support base (1).

8. A device according to claim 1, **characterized in that** the cradles (10) are adapted to receive the keels of the catamaran.

## Patentansprüche

1. Trägervorrichtung für einen Katamaran, **dadurch gekennzeichnet, dass** sie ein längliches Traggestell (1) umfasst, das Längsenden hat, die mit Ankopplungselementen (4) ausgestattet sind, die dazu geeignet sind, senkrecht über genormten Ankopplungselementen eines Containers angeordnet zu werden, derart, dass nach dem Platzieren des Traggestells auf dem Container die Trägervorrichtung auf dem Container verriegelt ist, sowie ein Trägerelement (5), das an dem Traggestell (1) quer zu demselben befestigt ist und Enden hat, die sich auskragend erstrecken und an denen Schienen (10) befestigt sind, die sich in Längrichtung des Traggestells auf beiden Seiten desselben erstrecken, so dass, wenn ein Katamaran auf der Vorrichtung platziert ist, die Ankopplungselemente für übliche Hebemittel, die in einem Hafengelände zur Verfügung stehen, zugänglich bleiben.

2. Vorrichtung nach Anspruch 1, **dadurch gekennzeichnet, dass** die Schienen (10) einen Boden (12) haben, der unterhalb der oberen Fläche des Traggestells liegt.

3. Vorrichtung nach Anspruch 1, **dadurch gekennzeichnet, dass** das Trägerelement an der oberen Fläche des Traggestells befestigt ist.

4. Vorrichtung nach Anspruch 3, **dadurch gekennzeichnet, dass** das Trägerelement Querträger (6) umfasst, die über Längsstreben (7) miteinander verbunden sind.

5. Vorrichtung nach Anspruch 4, **dadurch gekennzeichnet, dass** die Querträger (6) abgebogene Abschnitte (9) umfassen, die sich nach unten erstrecken, und die Schienen an den abgebogenen Abschnitten befestigt sind.

6. Vorrichtung nach Anspruch 4, **dadurch gekennzeichnet, dass** sie Stabilisierungselemente (8) umfasst, die an den Trägern (6) befestigt sind und sich jenseits derselben in Längsrichtung des Traggestells erstrecken, indem sie auf dem Traggestell zur Anlage kommen.

7. Vorrichtung nach Anspruch 1, **dadurch gekennzeichnet, dass** das Trägerelement (5) durch Schweißnähte (11) an einem Metallrahmen (3) des Traggestells (1) befestigt ist.

8. Vorrichtung nach Anspruch 1, wobei die Schienen (10) dazu geeignet sind, Kiele des Katamarans aufzunehmen.
